# EUROPEAN PATENT SPECIFICATION

(11) **EP 2 760 980 B1**
(45) Date of publication and mention of the grant of the patent: **16.12.2015**
(21) Application number: 12773101.6
(22) Date of filing: 25.09.2012
(51) Int. Cl.: C10L 5/36, C10L 7/02, C10L 11/04

(54) **SOLID FIRELIGHTERS**
FESTSTOFF-FEUERANZÜNDER
ALLUME-FEUX

(30) Priority: 29.09.2011 GB 201116761
(43) Date of publication of application: 06.08.2014
(73) Proprietor: Standards Brands (UK) Limited, Cleeve Road Leatherhead Surrey KT22 7SD (GB)
(72) Inventor: BARFORD, Rick, Leatherhead Surrey KT22 7SD (GB)
(74) Representative: Swan, Elizabeth Mary
(86) International application number: PCT/GB2012/052367
(87) International publication number: WO 2013/045909

(56) References cited:
- WO-A2-2008/056153
- US-A- 3 650 711
- US-A- 3 726 652
- US-A- 4 083 697
- US-A- 4 293 313

## Description

### Field of the Invention

This invention relates to solid firelighters often generically known as "white firelighters" of the type which may be used to initiate combustion of the primary fuel in barbecues [BBQs] or domestic wood or coal fires. Firelighters can be used irrespective of whether the primary fuel is in the form of charcoal (lump wood or briquettes), natural wood as used in outdoor wood fires or coal as used in domestic indoor fires.

### Background to the Invention

So called 'white' firelighters are well known, having been available for decades, and are supplied in the form of a scored 'board' or as individual pre-formed units. Such firelighters comprise a solidified emulsion consisting of a closed cell matrix of a polymerised urea-formaldehyde [UF] resin containing a combustible material. The combustible material is generally a liquid hydrocarbon or similar, at levels of approximately 80% by weight of the total firelighter. The UF resin matrix is formed in-situ through acid catalysis to promote polymerization of an aqueous urea-formaldehyde resin around the hydrocarbon liquid and thus form the 'solid' firelighter.

In use, the firelighters are applied either below or dispersed among the primary fuel, for example pieces of BBQ or domestic fireplace fuel. Once lit by the simple application of a lighted match or similar flame, the firelighters burn with a hot flame and, importantly, burn for sufficient time to ensure the complete and full ignition of the primary fuel.

For many years the formulations for these urea formaldehyde resin-based firelighters have been based on the use of readily burnable hydrocarbons such as, for example, kerosenes, iso-paraffins, n-paraffins and diesel at levels of approximately 80% by weight of the total firelighter. This allows for the formation of a stable oil-in-water emulsion so that the subsequent acid-catalysed polymerisation of the resin occurs in a controlled manner without splitting, separation, inversion or other de-stabilisation of the emulsion.

However, there is now an ever-increasing pressure on industry to identify ways of providing a reduction in use of highly refined hydrocarbon-based fuels, so decreasing the level of hydrocarbon from the approximately 80% by weight of the firelighter that is currently used would be highly desirable. This is due to the reducing availability of highly refined hydrocarbons such as kerosene, with consequent continual rise in costs and also, importantly, to the desire to find a more environmentally-responsible approach.

It has long been an aim of the researchers in this field to reduce the hydrocarbon content of a firelighter without reducing the performance. In particular, it is important not to reduce the firelighter burn time, so as to ensure full ignition of the primary fuel can take place.

By way of background, it is well known by those skilled in the art that UF-based kerosene firelighters cannot be easily reformulated by simply reducing the hydrocarbon content, without the resulting increase in proportion of the other components, namely water and urea, significantly reducing the ability of the firelighter initially to ignite or to sustain a burn of sufficient length of time to ensure primary fuel ignition. Urea in particular is an ignition-impairing material due to its nitrogen content and is used extensively in formulating fire-retardant products. Water is obviously also ignition-impairing.

WO2008/056153 describes the inclusion in a firelighter of comminuted lignite, optionally together with peat, which can be used as a partial substitute for liquid hydrocarbon in 'white' firelighters. However, it has been found that lignite particles tend to cause destabilisation of the liquid emulsion, in quantities of just 2 to 4% by weight of the firelighter. If lignite is granulated it can be tolerated in slightly higher quantities, but still causes destabilisation when added in amounts of more than around 10%.

WO2008/056153 also describes the use of inert 'fillers' such as silicon dioxide and aluminium oxide in minor amounts, preferably below 5% by weight of the total firelighter. It is generally understood that amounts of inert filler above around 5% by weight compromise the emulsion stability and interfere with resin polymerization. This occurs because the simple substitution of hydrocarbon with combustible or non-combustible solid powdered fillers generally causes de-stabilisation of the hydrocarbon/aqueous UF resin liquid emulsion. The emulsion separates into its two constituent phases and/or the filler reacts with the UF resin in such a way as to prevent subsequent polymerisation, thus preventing the mix from setting into a solid form.

It is an object of the present invention to provide a firelighter having a reduced concentration of expensive, highly refined hydrocarbon, below the traditional 80% by weight of the firelighter, that maintains acceptable performance, particularly burn time.

### Summary of the Invention

According to a first aspect, the present invention provides a firelighter comprising a solidified emulsion of a liquid hydrocarbon encapsulated in polymerised aqueous resin, wherein the liquid hydrocarbon is present in an amount of 30 to 75% by weight of the firelighter, and wherein the firelighter also contains petroleum coke in particulate form.

According to a second aspect, the present invention relates to a method of making a firelighter according to any preceding claim, the method comprising the steps of: forming an emulsion of a liquid hydrocarbon in an aqueous resin, wherein the emulsion additionally comprises petroleum coke in particulate form; and polymerising the aqueous resin so that it encapsulates the liquid hydrocarbon in a solidified emulsion to form a firelighter, wherein the firelighter comprises 30 to 75% by weight liquid hydrocarbon.

According to a third aspect, the present invention relates to the use of a firelighter according to the first aspect of the invention, to initiate combustion of the primary fuel in a barbecue, domestic wood fire or domestic coal fire.

Surprisingly it has been found that part of the liquid hydrocarbon content of a traditional firelighter can be replaced with petroleum coke without incurring the expected reduction in performance. When petroleum coke is added to the firelighter, the level of hydrocarbon used can be reduced to between 30 and 75%, well below the traditional levels used. In particular, the burn time of the firelighter remains very good, which is important to ignite the primary fuel, and the amount of heat transferred to the primary fuel is surprisingly high. Without wishing to be bound to theory, this is thought to be due to the fact that a lower and less aggressive burn results in more energy being transferred to the medium being heated, since less is energy lost to the atmosphere through the flame being too large and burning outside of the material to be heated.

Surprisingly petroleum coke, unlike lignite and the inert filler as commonly understood, does not react with and de-stabilise the resin/hydrocarbon liquid emulsion, or interfere with the acid-catalysed reaction needed to set the emulsion into a solid. Therefore, it is possible to include petroleum coke at higher levels than can be used with other fillers, without granulating the petroleum coke, and hence replace more of the hydrocarbon, than has been possible in the past. Since petroleum coke is a by-product in the production of highly refined hydrocarbons such as kerosene, firelighters according to the present invention help to address the environmental and economic concerns surrounding the use of highly refined hydrocarbons.

It has been found that firelighters according to the invention are safe to use and, when ignited, burn steadily without flaring, sudden deflagration, spitting, dripping or explosion.

In firelighters according to the present invention, the concentration of hydrocarbon is preferably from 40 to 65% by weight of the firelighter. The concentration of the petroleum coke is preferably at least 1 % by weight of the firelighter, more preferably at least 5% by weight. Petroleum coke can surprisingly be included at levels up to 60% by weight of the firelighter without causing destabilisation of the emulsion, and is preferably included at 10 to 50% by weight, more preferably 20 to 40% by weight. The concentration of the aqueous resin is from 10 to 30% by weight, preferably 12 to 25% by weight of the firelighter.

### Detailed Description of the Invention

Petroleum coke, commonly referred to as "petcoke", is a carbonaceous solid by-product of the Coker refinery process or other cracking processes which upgrade fuel oil or crude oil by heating it and cracking it to higher valued gasoline, jet and diesel components. The chemical composition of petroleum coke depends on the oil from which it is made, and the parameters of the refining process, but is mainly carbon, with minor amounts of ash, sulphur, volatile matter, nickel and vanadium, as well as possible other components. Petroleum coke is a common material, and this term is well understood by the skilled person in this field.

Compared to steam coal, there is generally lower ash, lower moisture and lower volatiles, resulting in a much higher heating value. There is generally higher sulphur, than coal, although, as noted above the exact composition will depend on the feedstock or crude oil of origin.

One example of petroleum coke was analysed as disclosed in "Petroleum Coke Category Analysis and Hazard Characterization; submitted to the US EPA - by The American Petroleum Institute, Petroleum HPV Testing Group; December 28^{th} 2007" and the analytical characterization found that physical and compositional characteristics considered important in petroleum coke include weight % ash, weight % sulfur, weight % volatile matter, nickel (mg/kg), and vanadium (mg/kg) (Lee et al., 1997). Examples of selected physical and compositional characteristics of fuel grade green coke are shown in Table 1. The remainder of the composition is carbon.

**Table 1**

| |
|---|
| Properties Fuel-Grade Green Coke |
| Sulfur (wt%) 1.5 - 5.5 |
| Ash (wt%) 0.1 - 1.0 |
| Nickel (ppm) N.D. |
| Vanadium (ppm) 200 - 400 |
| Volatile matter (wt%) 9 - 12 |
| Bulk density (g/cm3) approx 0.80 |
| Real density (g/cm3) approx 2.06 |
| Moisture 10 - 14% |
| Nominal calorific valure 5000 - 1000K/cal nett |

This example is given for illustration and, as noted above, the composition may vary depending upon the feedstock or crude oil of origin.

An example of petroleum coke that has been used by the present inventors is "Green Delayed Sponge Petcoke", supplied by Deutsch BP AG, Veba Bitumen/coke Wittner Strasse 45, 44789 Bochum, Germany. In Ireland this can be obtained through Hayes Fuels.

Production costs associated with petroleum coke are minimal because it is a by-product of the refining process. Therefore replacing some of the highly refined hydrocarbons such as kerosene with petroleum coke is economically attractive. This is also environmentally attractive since although petroleum coke is a carbonaceous product, it is a by-product that is in lower demand than the more highly refined products, so finding a use for this product is beneficial from an environmental point of view.

Petroleum coke is used as particles having a particle size up to 5mm but more preferably in the range 2 to 4mm. By particle size, we mean particle diameter. This can be determined by sieving. Typically particles of petroleum coke are graded by sieving. In one embodiment particles are used that pass through a 4mm sieve but are retained on a 2mm sieve.

The maximum size is dictated by the need to prevent particle separation due to gravity once mixed in the emulsion. Although the emulsion displays non-Newtonian rheology of shear thinning and is thus able to suspend larger particle sizes, the inevitable mechanical vibrations induced in the mix during production tends to promote particle precipitation if sized above about 5mm.

Although reduced compared to traditional firelighters, a liquid hydrocarbon still constitutes a significant proportion of a firelighter according to the invention. Any hydrocarbon that is suitable for this purpose can be used including kerosenes, iso-paraffins, n-paraffins and diesel. Kerosene is most preferred.

In the present invention the firelighter comprises a "solidified emulsion", in particular a solidified emulsion of a liquid hydrocarbon encapsulated in polymerised aqueous resin. By the term solidified emulsion we mean an emulsion of two liquids that has solidified, in this case through polymerisation. During manufacture of the firelighters an oil-in-water emulsion is formed of the liquid hydrocarbon in an aqueous resin. The aqueous resin can be any suitable chemical, such as a melamine formaldehyde, but is usually urea formaldehyde. The resin needs to be thermosetting, rather than thermoplastic, so that the produce maintains its integrity once it has been lit.

The aqueous resin is a mixture of the resin solids in water, usually with 20 to 60% resin in 80 to 40% water. Often a mixture of 40% resin solids with 60% water is used. As an example, "Dynea Ireland" supply a suitable urea formaldehyde under the trade name "Prefere 87 1640HD".

Once the emulsion has formed, the aqueous resin is polymerised through the addition of acid which acts as a catalyst. Any suitable acid can be used which can lower the pH to below around 3. Hydrochloric acid is most commonly used, for example as a 1 molar solution. This causes the resin to polymerise around, and encapsulate the liquid hydrocarbon in a matrix, to form the solidified emulsion. The emulsion is poured into a mould just before addition of the acid, and so solidifies in the mould. The mould is usually the form of a scored board, which individual firelighters can be broken off from, but the firelighter can also be formed as individual units.

Firelighters according to the present invention may be manufactured by processes similar to those used to produce traditional firelighters with 80% by weight kerosene or other hydrocarbon or fatty esters. To the emulsion of hydrocarbon and aqueous resin is added petroleum coke powder or granules as described above, in quantities up to 60%, preferably 10 to 50% by weight. The petroleum coke is added in a controlled manner using, for example, a regular screw type volumetric powder feeder and then the emulsion is mixed to form a homogenous mix. Although the granules add body to the mix, the rheology is affected less than expected, with for example 30% by weight levels of petroleum coke not changing the ability to a) easily pump the mix as before, b) add acid catalyst and c) subsequently mix and pour into moulds for polymerisation and solidification to take place.

### Examples

An embodiment of the invention will now be described by way of example.

69 parts by weight of regular production made firelighter emulsion - comprising 80% as kerosene (the remaining 20% being made up of 40% solids urea formaldehyde resin in water), was taken and 30 parts by weight of graded petroleum coke particles between 2mm to 4mm in size was added. This was then mixed until homogeneous. To this mix was then added 1 part by weight of 1 Molar hydrochloric acid with rapid mixing. The mixture was then immediately poured into moulds to set. After setting, the de-moulded blocks were then scored, sealed into polyester packs to prevent hydrocarbon evaporative loss and allowed to equilibrate for 24 hours.

A duplicate without added petroleum coke was made alongside as control (i.e. 100 parts regular production made firelighter emulsion comprising 80% kerosene, and 20 % being made up of 40% solids urea formaldehyde resin in water).

After 24 hours, individual firelighters were snapped off the blocks along the scorelines and checked for weight equality between test and control lighters, then tested for burn times and general heat release via a modified calorimeter test - [heat capture versus time test].

### Results summary:

Burn time : 30% petroleum coke firelighter gave 100% the burn time when compared to the findings for the control lighter without petroleum coke.

Modified calorimeter [heat captured] : 30% petroleum coke firelighter gave 95% the heat capture value compared to the findings for the control without petroleum coke.

Kerosene has a higher energy content than petroleum coke, and the overall energy content of the inventive firelighter is approximately 20% lower than that of the control. The calculated energy level of the inventive firelighter with 55% kerosene and 30% petroleum is 26.5MJ/kg, compared to 32.8MJ/Kg for the control firelighter with 80% kerosene. Accordingly, it could be expected that the heat captured for the inventive firelighter would be about 20% lower than that of the control. Surprisingly, the inventive firelighter performed better than can have been expected, with only a 5% lower heat capture value compared to the control.

In addition, surprisingly the burn time was the same for the inventive firelighter as for the control. This is important, since the firelighter must burn for long enough to ignite the primary fuel. In this case the inventive firelighter had surprisingly good performance, which would not be expected given the replacement of the hydrocarbon with petroleum coke.

## Claims

1. A firelighter comprising a solidified emulsion of a liquid hydrocarbon encapsulated in polymerised aqueous resin, wherein the liquid hydrocarbon is present in an amount of 30 to 75% by weight of the firelighter, and wherein the firelighter also contains up to 50% by weight petroleum coke in particulate form wherein the particle size is up to 5mm as graded by sieving.

2. A firelighter according to claim 1, in which the concentration of liquid hydrocarbon is from 40 to 60% by weight of the firelighter.

3. A firelighter according to claim 1 or 2, in which the concentration of the petroleum coke is at least 1 % by weight of the firelighter, more preferably at least 5% by weight of the frelighter.

4. A firelighter according to any preceding claim, in which the concentration of the petroleum coke is 10 to 50% by weight, more preferably 20 to 40% by weight.

5. A firelighter according to any preceding claim, in which the concentration of the aqueous resin is from 10 to 30% by weight, preferably 12 to 25% by weight of the firelighter.

6. A firelighter according to any preceding claim, in which petroleum coke is used as particles having a particle size in the range 2 to 4mm.

7. A method of making a firelighter according to any preceding claim, the method comprising the steps of:
forming an emulsion of a liquid hydrocarbon in an aqueous resin, wherein the emulsion additionally comprises up to 50% by weight petroleum coke in particulate form wherein the particle size is up to 5mm; and
polymerising the aqueous resin by acid catalyst to generate a solidified emulsion to form a firelighter, wherein the firelighter comprises 30 to 75% by weight liquid hydrocarbon.

8. The use of a firelighter according to any of claims 1 to 6, to initiate combustion of the primary fuel in a barbecue, domestic wood fire or domestic coal fire.

## Patentansprüche

1. Feueranzünder, umfassend eine verfestigte Emulsion eines flüssigen Kohlenwasserstoffs, der in ein polymerisiertes wässriges Harz eingekapselt ist, wobei der flüssige Kohlenwasserstoff in einer Menge von 30 bis 75 % des Gewichts des Feueranzünders vorhanden ist und wobei der Feueranzünder zudem bis zu 50 % des Gewichts Petrolkoks in Partikelform enthält, wobei die Partikelgröße bis zu 5 mm beträgt, wie durch Sieben eingestuft.

2. Feueranzünder nach Anspruch 1, bei dem die Konzentration des flüssigen Kohlenwasserstoffs von 40 bis 60 % des Gewichts des Feueranzünders beträgt.

3. Feueranzünder nach Anspruch 1 oder 2, bei dem die Konzentration des Petrolkoks wenigstens 1 % des Gewichts des Feueranzünders, vorzugsweise wenigstens 5 % des Gewichts des Feueranzünders beträgt.

4. Feueranzünder nach einem der vorherigen Ansprüche, bei dem die Konzentration des Petrolkoks 10 bis 50 % des Gewichts, vorzugsweise 20 bis 40 % des Gewichts beträgt.

5. Feueranzünder nach einem der vorherigen Ansprüche, bei dem die Konzentration des wässrigen Harzes von 10 bis 30 % des Gewichts, vorzugsweise 12 bis 25 % % des Gewichts des Feueranzünders beträgt.

6. Feueranzünder nach einem der vorherigen Ansprüche, bei dem Petrolkoks als Partikel verwendet wird, die eine Partikelgröße im Bereich von 2 bis 4 mm aufweisen.

7. Verfahren zur Herstellung eines Feueranzünders nach einem der vorherigen Ansprüche, wobei das Verfahren die folgenden Schritte aufweist:
Formen einer Emulsion eines flüssigen Kohlenwasserstoffs in einem wässrigen Harz, wobei die Emulsion zudem bis zu 50 % des Gewichts Petrolkoks in Partikelform enthält, wobei die Partikelgröße bis zu 5 mm beträgt, und
Polymerisieren des wässrigen Harzes durch einen Säurekatalysator, um eine verfestigte Emulsion zu erzeugen, um einen Feueranzünder zu bilden, wobei der Feueranzünder 30 bis 75 % des Gewichts flüssigen Kohlenwasserstoff umfasst.

8. Verwendung eines Feueranzünders nach einem der Ansprüche 1 bis 6, um eine Verbrennung des Primärbrennstoffs bei einem Barbecue, einem heimischen Holzfeuer oder einem heimischen Kohlefeuer einzuleiten.

## Revendications

1. Allume-feu comprenant une émulsion solidifiée d'un hydrocarbure liquide encapsulé dans une résine aqueuse polymérisée, dans lequel l'hydrocarbure liquide est présent en une quantité de 30 à 75 % en poids de l'allume-feu, et dans lequel l'allume-feu contient également jusqu'à 50 % en poids de coke de pétrole sous forme particulaire, la taille de particule étant inférieure ou égale à 5 mm, classée par tamisage.

2. Allume-feu selon la revendication 1, dans lequel la concentration en hydrocarbure liquide est de 40 à 60 % en poids de l'allume-feu.

3. Allume-feu selon la revendication 1 ou 2, dans lequel la concentration en coke de pétrole est d'au moins 1 % en poids de l'allume-feu, plus préférablement d'au moins 5 % en poids de l'allume-feu.

4. Allume-feu selon l'une quelconque des revendications précédentes, dans lequel la concentration en coke de pétrole est de 10 à 50 % en poids, plus préférablement de 20 à 40 % en poids.

5. Allume-feu selon l'une quelconque des revendications précédentes, dans lequel la concentration en résine aqueuse est de 10 à 30 % en poids, plus préférablement de 12 à 25 % en poids de l'allume-feu.

6. Allume-feu selon l'une quelconque des revendications précédentes, dans lequel le coke de pétrole est utilisé sous forme de particules ayant une taille de particule comprise dans la plage allant de 2 à 4 mm.

7. Procédé de préparation d'un allume-feu selon l'une quelconque des revendications précédentes, le procédé comprenant les étapes de :
formation d'une émulsion d'un hydrocarbure liquide dans une résine aqueuse, l'émulsion comprenant en outre jusqu'à 50 % en poids de coke de pétrole sous forme particulaire, la taille de particule étant inférieure ou égale à 5 mm ; et
polymérisation de la résine aqueuse par catalyse acide pour produire une émulsion solidifiée afin de former un allume-feu, l'allume-feu comprenant de 30 à 75 % en poids d'hydrocarbure liquide.

8. Utilisation d'un allume-feu selon l'une quelconque des revendications 1 à 6, pour initier la combustion du combustible primaire dans un barbecue, un feu de bois domestique ou un feu de charbon domestique.
